# EUROPEAN PATENT SPECIFICATION

(11) **EP 4 134 886 B1**
(45) Date of publication and mention of the grant of the patent: **17.07.2024**
(21) Application number: 20930054.0
(22) Date of filing: 09.04.2020
(51) Int. Cl.: G06Q 10/04, G06Q 50/04

(54) **METHOD OF ARRANGING DEVICES OF PROCESSING PLANT, AND METHOD OF MANUFACTURING PROCESSING PLANT**
VERFAHREN ZUR ANORDNUNG VON VORRICHTUNGEN EINER VERARBEITUNGSANLAGE, UND VERFAHREN ZUR HERSTELLUNG EINER VERARBEITUNGSANLAGE
MÉTHODE D'AGENCEMENT DES DISPOSITIFS D'UNE USINE DE TRAITEMENT, ET MÉTHODE DE FABRICATION D'UNE USINE DE TRAITEMENT

(43) Date of publication of application: 15.02.2023
(73) Proprietor: JGC Corporation, Nishi-ku Yokohama-shi Kanagawa 220-6001 (JP)
(72) Inventor: MIYASHITA, Toshikazu, Yokohama-shi, Kanagawa 220-6001 (JP); SAKIYAMA, Hiromichi, Yokohama-shi, Kanagawa 220-6001 (JP); AKIYAMA, Shigeru, Yokohama-shi, Kanagawa 220-6001 (JP); KATO, Akihiro, Yokohama-shi, Kanagawa 220-6001 (JP); KANAZAWA, Satoru, Yokohama-shi, Kanagawa 220-6001 (JP); MOURI, Kenji, Yokohama-shi, Kanagawa 220-6001 (JP); YAMADA, Yoshinori, Yokohama-shi, Kanagawa 220-6001 (JP)
(74) Representative: Becker, Eberhard
(86) International application number: PCT/JP2020/016039
(87) International publication number: WO 2021/205625

(56) References cited:
- JP-A- 2007 164 771
- JP-A- H0 773 224
- XU SIYU ET AL: "Plant Layout Optimization for Chemical Industry Considering Inner Frame Structure Design", SUSTAINABILITY, vol. 12, no. 6, 21 March 2020 (2020-03-21), pages 2476, XP093041124, Retrieved from the Internet <URL:http://dx.doi.org/10.3390/su12062476> DOI: 10.3390/su12062476
- GUIRARDELLO R ET AL: "Optimization of process plant layout with pipe routing", COMPUTERS & CHEMICAL ENGINEERING, PERGAMON PRESS, OXFORD, GB, vol. 30, no. 1, 15 November 2005 (2005-11-15), pages 99 - 114, XP027759815, ISSN: 0098-1354, [retrieved on 20051115]

## Description

### Technical Field

The present invention relates to a technology of determining an arrangement of devices included in a processing plant.

### Background Art

Processing plants configured to process fluid include, for example, natural gas plants configured to liquefy natural gas or separate and recover natural gas liquid, petroleum refining plants configured to distill or desulfurize crude oil or various intermediates, and chemical plants configured to produce petrochemical products, intermediate chemicals, or polymers. In this application, the "fluid" includes, in addition to gas and liquid, granular materials (powder, grains, pellets, and the like) having flowability.

Those processing plants each have a configuration in which a large number of devices are arranged in a predetermined installation area and those devices are connected to each other by pipes. Examples of the large number of devices include static devices such as columns, tanks, and heat exchangers, and dynamic devices such as pumps and compressors.

At this time, designers have been required to determine the arrangement of the large number of devices included in the processing plant through trial and error with comprehensive consideration of, for example, the order to process the fluid, restrictions on a landform and area of the installation area, restrictions in terms of safety, and use amounts of materials for forming the devices and pipes (economic efficiency).

However, a processing plant in which a large number of devices are connected to each other via pipes often has a complicated configuration. At this time, not only work of searching for a more efficient device arrangement within a range of a large number of restrictions tends to require a large load for investigation, but also a result of the work may depend on the skill of the designer. Therefore, there has been a demand for a method with which, while the load of the work required for determining the device arrangement is reduced, the economic efficiency of the determined device arrangement can be quantitatively grasped.

In Patent Literature 1, there is described a natural gas processing apparatus in which a range in which the devices are actually arranged is limited within a device arrangement area set in advance so as to correspond to a range of a working radius of a maintenance crane, which is determined in accordance with a lifting load. In Patent Literature 1, however, there is no reference about the technology of quantitatively grasping the economic efficiency of the determined device arrangement.

### Citation List

### Patent Literature

[PTL 1] WO 2018/235267 A1
XU SIYU ET AL: "Plant Layout Optimization for Chemical Industry Considering Inner Frame Structure Design", SUSTAINABILITY, vol. 12, no. 6, 21 March 2020, page 2476, relates to a plant layout design including frames that are set as a special kind of inner structure and are added into the model to assign facilities into several blocks.

### Summary of Invention

### Technical Problem

The present technology provides a technology of searching for an arrangement having a smaller total use amount of a pipe material for device groups each including devices included in a processing plant.

### Solution to Problem

The invention is set out in the appended set of claims. The following disclosure serves a better understanding of the present invention. According to one embodiment of the present invention, there is provided a method of arranging devices of a processing plant configured to process fluid, the method as defined in claim 1.

The method of arranging devices of a processing plant may include the following features.
(a) The step of selecting the arrangements having the small total use amounts of the pipe materials includes executing a step of changing the arrangement of the plurality of device groups through use of a genetic algorithm or a particle swarm optimization method, to thereby select arrangements having smaller total use amounts of the pipe materials.
(b) The step of setting the installation area and the pipe-rack arrangement area includes setting a plurality of cases which are different in at least one of an arrangement position of the pipe-rack arrangement area or the number of the pipe-rack arrangement area to be arranged, and the method further includes executing a step of selecting the arrangements having the small total use amounts of the pipe materials for each of the plurality of cases, and selecting, from selection results of the arrangements of the plurality of cases, a plurality of combinations of the cases and the arrangements having the smaller total use amounts of the pipe materials.
(c) In Item (b), in the installation area, pipe-rack arrangement areas of a main pipe rack and a sub-pipe rack serving as the pipe rack are allowed to be set, the sub-pipe rack being configured to be connected to a long side of the main pipe rack and extend in a direction of intersecting with the long side, and the plurality of cases include cases in which the pipe-rack arrangement areas are set so as to vary in, as viewed from the main pipe rack, a direction of the long side thereof to which the sub-pipe rack is connected and the number of sub-pipe racks to be connected to each long side, the number including a case of zero.
(d) In Item (c), the plurality of cases further include cases which are common in, as viewed from the main pipe rack, the direction of the long side thereof to which the sub-pipe rack is connected and the number of sub-pipe racks to be connected to each long side, the number including the case of zero, but vary from one another in an arrangement position of the main pipe rack in the direction of intersecting with the long side.
(e) In Item (c), in the plurality of cases, the pipe-rack arrangement area of the main pipe rack is set to be movable within a range set in advance in the direction of intersecting with the long side, and the pipe-rack arrangement area of the sub-pipe rack is set to be movable in a direction of intersecting with a long side of the sub-pipe rack, which is limited to a range in which, when a plurality of sub-pipe racks are connected to the main pipe rack, a pipe-rack arrangement area of one sub-pipe rack and a pipe-rack arrangement area of another sub-pipe rack are prevented from overlapping each other, and when the first step is executed with the arrangement of the plurality of device groups being changed, arrangement positions of the pipe-rack arrangement areas of the main pipe rack and the sub-pipe rack are allowed to be changed.
(f) In Item (c), when the first step is executed with the arrangement of the plurality of device groups being changed, a pipe-rack arrangement area of a sub-sub-pipe rack serving as the pipe rack is allowed to be generated, the sub-sub-pipe rack being configured to be connected to a long side of the sub-pipe rack and extending in a direction of intersecting with the long side of the sub-pipe rack.
(g) In the plurality of device groups, a connection side to be connected to a long side of the pipe rack is set in advance with respect to the outer edge of each occupied area.
(h) When the plurality of device groups are arranged in the first step, a maintenance area is provided in an area on an opposite side across the occupied region of a connection side to be connected to a long side of the pipe rack, the maintenance area being an area to which a device arranged in the one device group is carried out at a time of maintenance, and which has none of the occupied area and the pipe-rack arrangement area of another device group provided therein.
(i) The pipe information includes information required for calculating a cost per unit length of the pipe as the use amount of the pipe material, and the second step includes calculating a total cost of the pipe material as the total use amount of the pipe material of the pipe to be supported by the pipe rack.

Further, according to one embodiment of the present invention, there is provided a method of manufacturing a processing plant configured to process fluid, the method including a step of arranging a plurality of device groups based on an arrangement included in a plurality of arrangements having small total use amounts of pipe materials, which are selected by the method of arranging the devices of the processing plant described above, to thereby manufacture the processing plant.

### Advantageous Effects of Invention

According to this method, regarding the arrangement of the device groups obtained by dividing the large number of devices included in the processing plant, the computer obtains arrangements having small total use amounts of pipe materials. As a result, the economic efficiency of the determined device arrangement can be quantitatively grasped while the load of the work required for determining the device arrangement is reduced.

### Brief Description of Drawings

FIG. 1 is a schematic view of a plot plan of a processing plant.
FIG. 2 is a schematic view for illustrating an installation area of the processing plant and occupied areas of device groups.
FIG. 3 is a configuration view of device groups.
FIG. 4A is a first explanatory view for illustrating a method of arranging the device groups.
FIG. 4B is a second explanatory view for illustrating the method of arranging the device groups.
FIG. 5 is a plan view for illustrating configuration examples of pipe-rack arrangement areas.
FIG. 6 is a plan view for illustrating variations related to movement of the pipe-rack arrangement area.
FIG. 7 is a plan view for illustrating a connection side to be set for the occupied area of the device group, and a maintenance area.
FIG. 8A is a first explanatory view for illustrating a method of generating a sub-sub-pipe rack.
FIG. 8B is a second explanatory view for illustrating the method of generating a sub-sub-pipe rack.
FIG. 9 is an explanatory chart for illustrating a procedure of executing a method of arranging devices of a processing plant.
FIG. 10 is a schematic view for illustrating a state in which the occupied areas of the device groups are arranged in the installation area of the processing plant.

### Description of Embodiments

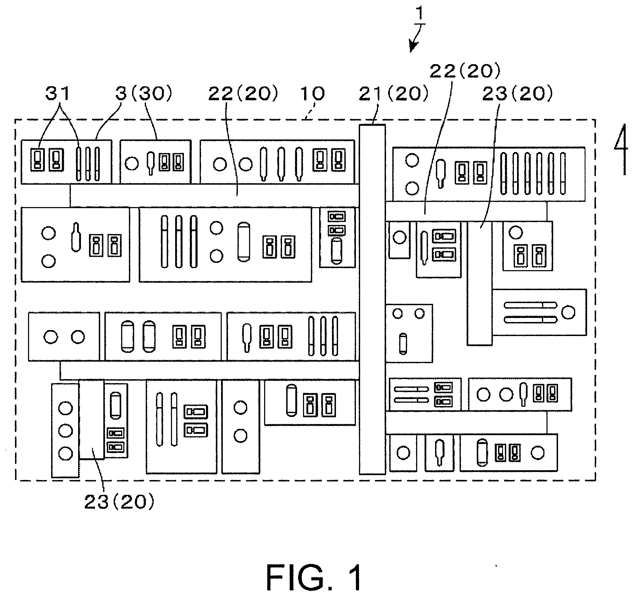

FIG. 1 is a plan view for schematically illustrating a configuration of a processing plant 1 to which a method of arranging devices (device arrangement method) of this example is applied.

As the processing plant 1 to which the device arrangement method of this example is applicable, there can be exemplified, for example, the natural gas plants, the petroleum refining plants, and the chemical plants described above. Those processing plants 1 each include a large number of devices 31 configured to process fluid such as gas, liquid, or granular materials having flowability. As examples of the devices 31 to be provided in the processing plant 1, there can be exemplified static devices such as various processing columns, for example, a fractionator column and a reaction column, and receiver tanks and heat exchangers in which gas-liquid separation is performed. There can also be exemplified dynamic devices such as pumps and compressors. The devices 31 provided in the processing plant 1 are connected to each other via pipes 4 through which the fluid is allowed to flow.

When the processing plant 1 is constructed in an installation area 10 set in advance, and the large number of devices 31 included in the installation area 10 are arranged in a disordered state, the pipes 4 for connecting the devices 31 to each other are increased in length, and a total use amount of a pipe material is increased. Further, also from the viewpoints of maintenance management and safety management, the devices 31 are desired to be arranged in order based on the way of thinking set in advance.

Therefore, in the processing plant 1 in which the large number of devices 31 are provided, the devices are divided into groups (hereinafter referred to as "device groups 3") in accordance with the order to process the fluid or relevance between the devices 31, and the devices 31 included in a common device group 3 may be collectively arranged in a unit area. The above-mentioned "unit area" is hereinafter referred to as "occupied area 30."

For example, FIG. 1 shows a state in which the large number of devices 31 included in the processing plant 1 are divided into a plurality of device groups 3, and the devices 31 included in each device group 3 are arranged in the occupied area 30 set in association with the corresponding device group 3. In this example, the device group 3 includes at least one device 31.

There is no particular limitation on a method of dividing the large number of devices 31 provided in the processing plant 1 into the plurality of device groups 3 as in the example illustrated in FIG. 1. For example, the grouping may be performed so that, along the flow of the fluid, one to dozens of devices 31 are included in one device group 3 for each type of treatment to which the fluid is subjected.

Further, the applicant is developing a method involving analyzing, by a computer, the relevance between the devices 31 based on data on a piping & instrument flow diagram created when the processing plant 1 is designed, and performing grouping so that the devices 31 having high relevance are included in the common device group 3. As described above, through use of a computer, the devices 31 may be automatically divided into groups based on a predetermined algorithm.

Moreover, in some cases, dynamic devices such as pumps and compressors, or packed columns having catalyst or adsorbents packed therein are provided redundantly in such a manner that a plurality of same devices are provided to allow switching and use at the time of maintenance, regeneration of the packing, and replacement, for example. Those redundant devices are often provided in the common device group 3.

Further, like a surge tank at an outlet of a compressor, there are also devices 31 designed on the premise that the devices 31 are provided at positions close to each other. In order to prevent the devices 31 of those types from being separated into different device groups 3 at the time of grouping, those devices 31 may be regarded as a set corresponding to one device 31, or those devices 31 may be set as one device group 3 in advance.

When the device group 3 includes a plurality of devices 31, the pipes 4 for connecting the devices 31 included in the common device group 3 to each other are arranged in the common occupied area 30 in which the device group 3 is arranged.

Meanwhile, the pipes 4 for connecting the devices 31 included in different device groups 3 to each other are arranged so as to pass through, in principle, pipe racks (main pipe rack 21, sub-pipe rack 22, and sub-sub-pipe rack 23) outside of the occupied area 30. The pipe racks 21, 22, and 23 are framework structures each configured to support the pipes 4 and formed into a band shape in plan view. In this example, an area having a band-like planar shape in which the pipe rack 21, 22, or 23 is to be arranged is referred to as "pipe-rack arrangement area 20."

As described above, the large number of devices 31 provided in the processing plant 1 are divided into a plurality of device groups 3, and the devices 31 included in each device group 3 are arranged in a common occupied area 30. In this manner, for example, devices 31 that are relevant to each other can be arranged at positions close to each other. As a result, as compared to a case in which the large number of devices 31 are arranged in a disordered state, excessive increase in length of the pipes 4 for connecting the devices 31 to each other can be suppressed, and the total use amount of the pipe material can be suppressed.

Meanwhile, in the processing plant 1 including the large number of devices 31, a large number of device groups 3 may be obtained after the grouping, and those device groups 3 may be able to be arranged in the common installation area 10 in a large number of patterns. Further, the length of the pipe 4 for connecting the devices 31 included in different device groups 3 to each other changes depending on arrangement positions of those device groups 3. Further, pipes 4 having different diameters and thicknesses also vary in use amount of a pipe material. Further, a pipe cost per unit weight varies as the selected pipe material is changed.

As described above, the total use amount or a total cost of the pipe material, which affects a construction cost of the processing plant 1, changes complicatedly depending on the pattern of the arrangement of the devices 31. Therefore, a considerable labor is required for the designer involved in the arrangement of the devices 31 in the processing plant 1 to search for an arrangement of the devices 31 having a smaller value in total use amount or total cost of the pipe material of the pipes 4 through trial and error. Further, the result may depend on the skill of the designer.

In view of the above, the device arrangement method of this example uses a computer to search for an arrangement of the device groups 3 having a smaller total use amount (which may be converted into total cost, the same holds true in the following) of the pipes 4 to be arranged to pass through the pipe racks 21, 22, and 23.

This problem can be understood as an optimization problem for searching for an arrangement having a smaller total use amount of the pipe material of the pipes 4 to be supported by the pipe racks 21, 22, and 23 when the plurality of device groups 3 are arranged in the installation area 10 of the processing plant 1.

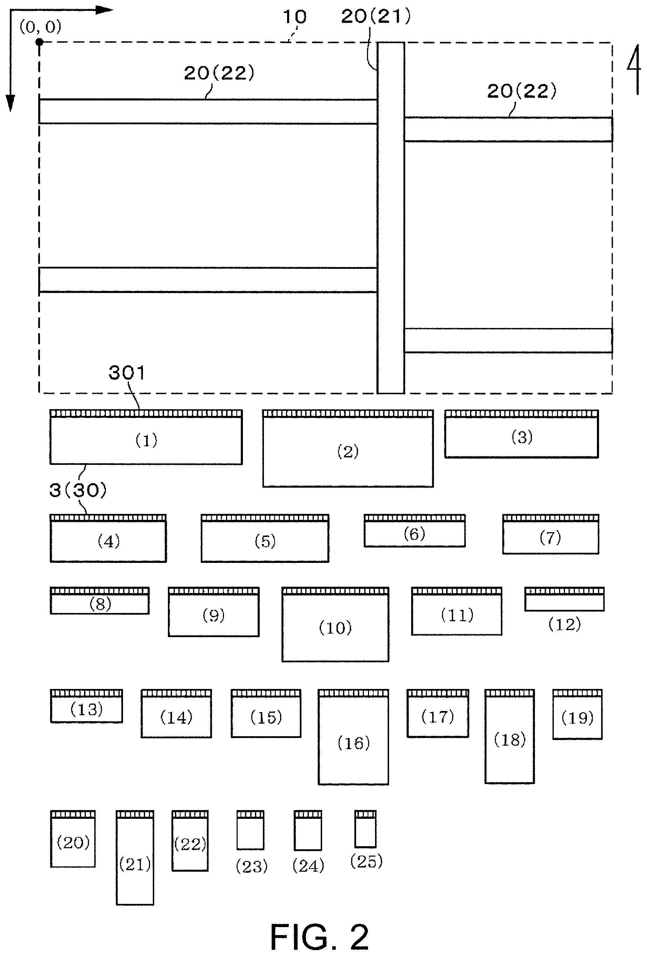

FIG. 2 is a plan view for schematically illustrating the installation area 10 of the processing plant 1 and the occupied areas 30 of the device groups 3 to be arranged in the installation area 10.

The area installation area 10 is an area in which the occupied areas 30 and the pipe-rack arrangement areas 20 are arranged. The installation area 10 has coordinates set therein so that an area in which the occupied area 30 or the pipe-rack arrangement area 20 is arranged can be specified. In FIG. 2, there is exemplified a case in which the installation area 10 has a rectangular outer edge, but the shape of the installation area 10 is not limited to this example. The shape of the installation area 10 may be set depending on a landform on which the processing plant 1 is constructed.

Further, it is not essential to arrange, in the installation area 10, all of the devices 31 included in the processing plant 1 based on the device arrangement method of this example. For example, regarding devices having predetermined arrangement positions, for example, devices for receiving raw materials from the outside, areas in which those devices are arranged may be excluded when the shape of the installation area 10 is set. The device arrangement area to be excluded from the installation area 10 may be set like an enclave inside the installation area 10.

Further, the pipe-rack arrangement areas 20 are set for the installation area 10 in advance. The arrangement positions of the pipe racks 21, 22, and 23 and the number of pipe racks 21, 22, and 23 to be arranged can be changed when the arrangement of the device groups 3 is searched for. Details thereof are described later.

As described above, the devices 31 of the processing plant 1 to be arranged in the installation area 10 are divided into a plurality of device groups 3 in advance. The device groups 3 are distinguishable from one another, and identification numbers of from "(1)" to "(25)" are assigned thereto in the example illustrated in FIG. 2.

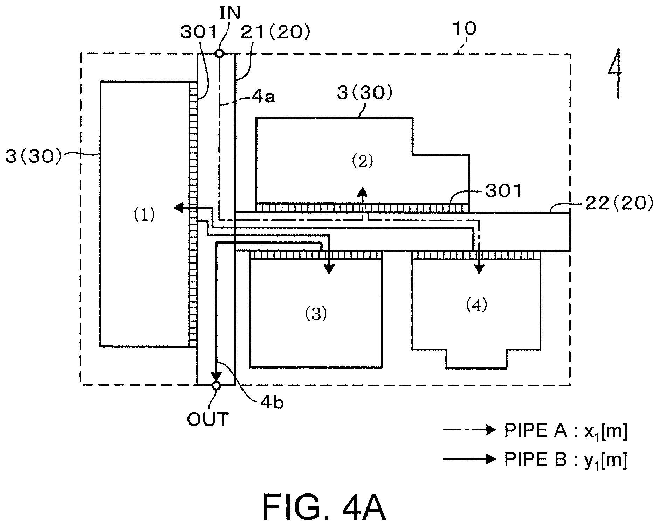

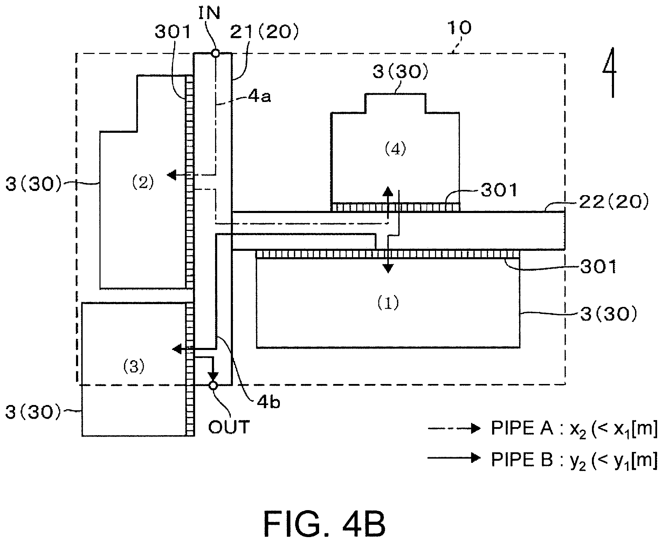

For each device group 3, an area and an outer-edge shape of the occupied area 30 are set in consideration of, for example, the number of devices 31 to be arranged, the size of each device 31, and an arrangement interval between the devices 31, which is set from the viewpoints of maintenance management and safety management. The outer-edge shape of the occupied 30 is also not limited to a rectangular shape exemplified in FIG. 2 (see also FIG. 4A and FIG. 4B). Further, as described later, the occupied 30 may have a connection side 301 set therein. The connection side 301 is to be connected to the pipe rack 21, 22, or 23.

In this case, the area and the outer-edge shape of the occupied area 30 can be specified by determining a specific arrangement of devices 31 to be provided in the corresponding occupied are 30. At this time, a framework having a plurality of floors may be provided in the occupied area 30 so that the devices 31 are installed separately in those plurality of floors.

However, determining the specific arrangement of the devices 31 is not an essential requirement to specify the area and the outer-edge shape of the occupied area 30. For example, the area and the outer-edge shape of the occupied area 30 may be automatically calculated simply based on variables such as the number of devices 31 to be provided in the occupied area 30, the size of each device 31 (area of occupation), the arrangement interval between the devices 31, and presence or absence of the framework and the number of floors thereof.

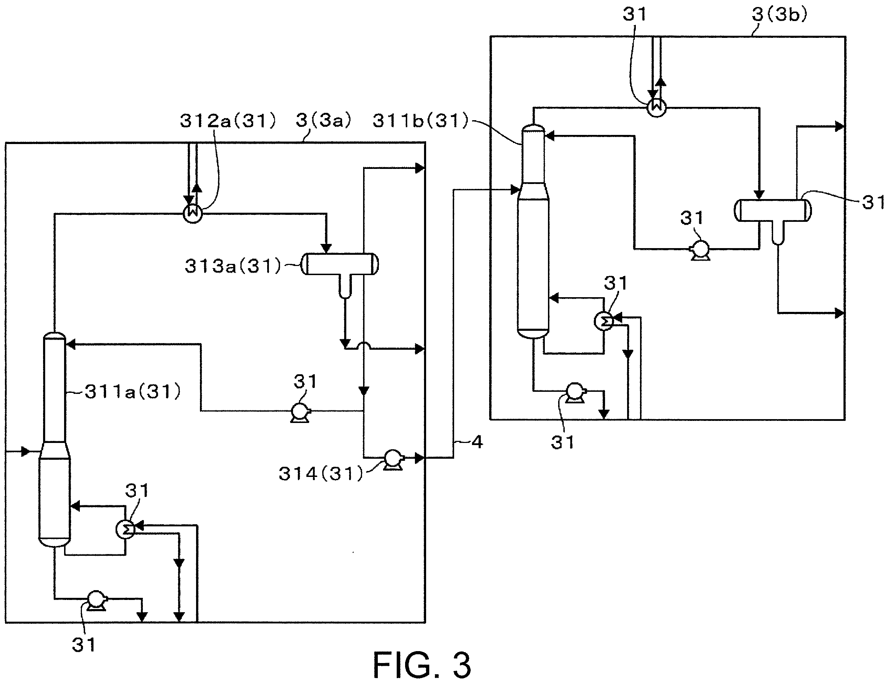

FIG. 3 is an illustration of a specific example in which the devices 31 included in a process of forming the processing plant 1 are divided into a plurality of device groups 3 (3a and 3b). FIG. 3 shows a process of cooling and liquifying, by an overhead cooler 312a, gas flowing out from a column top of a fractionator column 311a on a front-stage side, and feeding, by a liquid feed pump 314, part of liquid stored in a receiver 313a to a fractionator column 311b on a rear-stage side.

In the above-mentioned process, a plurality of devices 31 relevant to the fractionator column 311a on the front-stage side are grouped as the device group 3a, and a plurality of devices 31 relevant to the fractionator column 311b on the rear-stage side are grouped as the device group 3b.

In this case, when attention is paid to the flow of the liquid from the receiver 313a to the fractionator column 311b, the liquid feed pump 314 being the device 31 included in the device group 3a and the fractionator column 311b being the device 31 included in the device group 3b are connected to each other via the pipe 4. At this time, in the device arrangement method of this example, the device group 3a and the device group 3b are regarded as being paired via the pipe 4.

Further, as illustrated in FIG. 3, also other devices 31 included in the device groups 3a and 3b perform such fluid transfer that the fluid flows in from the outside of each of the device groups 3a and 3b and the fluid flows out from each of the device groups 3a and 3b to the outside. Also this fluid transfer of those devices is regarded that each of the device groups 3a and 3b and another device group 3 are paired via the pipe 4 through which each type of fluid is allowed to flow.

As information representing the relationship described above, each device group 3 illustrated in FIG. 2 has set therefor information representing the devices 31 included in the corresponding device group 3. Further, for a corresponding one of those devices 31 configured to perform fluid transfer with a counterpart device 31 included in another device group 3 via the pipe 4, there is set connection information representing that those device groups 3 are paired. Even in a case in which fluid transfer is performed with the outside of the processing plant 1 or, as described above, the device arrangement region that is excluded in advance from the installation area 10, connection information representing this fact is set.

As the connection information, there is set information that allows identification of via which pipe 4 a specific device 31 (in the example of FIG. 3, the liquid feed pump 314) included in one device group 3 (in the same example, the device group 3a) feeds fluid to a device 31 (in the same example, the fractionator column 311b) included in another device group 3 (in the same example, the device group 3b).

Similarly, also regarding one device group 3 (in the example of FIG. 3, the device group 3b) configured to receive the fluid, there is set, as the connection information, information representing via which pipe 4 the fluid is fed to a specific device 31 (in the same example, the fractionator column 311b) thereof from a device 31 (in the same example, the liquid feed pump 314) included in another device group 3 (in the same example, the device group 3a).

When any one device group 3 includes a plurality of devices 31 connected to devices 31 included in other device groups 3 via pipes 4, a plurality of pieces of the above-mentioned connection information are set so as to correspond to those devices 31.

Further, there may be a case in which the pipe 4 connected to one device 31 included in a certain device group 3 is branched at the outside of the corresponding device group 3 to be connected to devices 31 included in a plurality of other device groups 3, respectively. In this case, the connection information may be set supposing that the one device 31 is connected to each of the other devices 31 via a plurality of pipes 4 different from each other.

Further, for the pipe 4 corresponding to the connection information, information corresponding to a use amount of a pipe material per unit length is set as pipe information in accordance with the diameter and the thickness of the corresponding pipe 4. Further, when the total cost is calculated as the total use amount of the pipe 4, pipe materials are further taken into consideration to set the cost per unit length of the pipe 4 as the pipe information. Those pieces of pipe information are not required to directly indicate the actual use amount (weight) or price of the pipe material per unit length, and may be, for example, identification information set in association with those values.

Description is now given with reference to FIG. 4A and FIG. 4B of a method of searching for the arrangement of the devices 31 having a smaller value of the total use amount or the total cost of the pipe material of the pipes 4, for the installation area 10 and the device groups 3 (occupied areas 30) for which various types of information described above have been set.

As a restriction condition for the arrangement of the occupied areas 30, in the installation area 10, the next occupied area 30 cannot be arranged with an overlap in areas in which the pipe-rack arrangement areas 20 are arranged in advance or areas in which other occupied areas 30 are arranged in advance.

When the connection side 301 is set, each occupied area 30 is arranged in the installation area 10 so that the corresponding connection side 301 is brought into contact with a long side of the pipe-rack arrangement area 20. When the connection side 301 is not set, each occupied area 30 is arranged in the installation area 10 so that any side thereof that can have an interface for the pipe 4 with the pipe rack 21, 22, or 23 (which is generally a straight line but may be a curved line) is brought into contact with the long side of the pipe-rack arrangement area 20.

As long as the occupied area 30 can be arranged so that the side thereof corresponding to the interface for the pipe 4 (for example, the connection side 301) is brought into contact with the long side of the pipe-rack arrangement area 20, a part of the occupied area 30 may be allowed to protrude from the installation area 10 (occupied area 30 of (3) of FIG. 4B). Conversely, a restriction that it is essential to include all of the occupied areas 30 in the installation area 10 may be provided.

FIG. 4A and FIG. 4B show examples in which four occupied areas 30 of "(1)" to "(4)" are arranged in the installation area 10 in which the pipe-rack arrangement areas 20 for the pipe racks 21 and 22 are arranged at predetermined positions.

In those examples, the fluid to be processed flows from a position indicated by reference symbol "IN" of FIG. 4A and FIG. 4B in order of the device groups 3 of "(2)→(4)→(1)→(3)," and flows to the outside through a position indicated by reference symbol "OUT" of FIG. 4A and FIG. 4B. Further, positions in "IN→ (2)→(4)" are connected by pipes A having common pipe information set therefor (in FIG. 4A and FIG. 4B, indicated by the arrow of the long dashed short dashed line and denoted by reference symbol "4a") .

Meanwhile, positions in "(4)→(1)→(3)→OUT" are connected by pipes B having set therefor pipe information that is different from that for the pipes A (in FIG. 4A and FIG. 4B, indicated by the arrow of the solid line and denoted by reference symbol "4b").

Then, within the coordinates of the installation area 10, directions of the occupied areas 30 of "(1)" to "(4)" and coordinate ranges to be occupied by those occupied areas 30 are determined based on the above-mentioned restriction. With this, there is obtained a state in which the device groups 3 are arranged in the installation area 10. Then, the pipes 4a and 4b are arranged so that the pipes 4a and 4b pass through the pipe-rack arrangement areas 20 (main pipe racks 21 and 22) and connect the connection sides 301 (including the positions of "IN" and "OUT" of the installation area 10) by the shortest path.

In this case, from the viewpoint of searching for the arrangement of the device groups 3 having a smaller total use amount of the pipes 4 (4a and 4b), it is only required to grasp the influence of the change in length of the pipe 4 based on the difference in arrangement of the device groups 3. Therefore, it is not essential to strictly specify the actual length of the pipes 4 to be used at this stage of searching for the optimum arrangement.

From this viewpoint, it may be enough as long as there can be set, as the "shortest path" of each of the pipes 4a and 4b, a path of the pipe 4 that connects between interface positions of each device group 3 (or a position of "IN" or "OUT," the same holds true hereinafter in the description of FIG. 4A and FIG. 4B) and the pipe rack 21 or 22 without meandering and turning back. For the sake of convenience in illustration, the paths of the pipes 4a and 4b are illustrated in FIG. 4A and FIG. 4B so as to be shifted from each other without an overlap.

Description is further given here of the interface positions of each device group 3 and the pipe rack 21 or 22. For example, when a specific arrangement of the devices 31 to be provided in the occupied area 30 has been determined, interface positions close to the actual positions may be set in accordance with the arrangement. Further, when a specific arrangement of the devices 31 in the occupied area 30 has not been determined, for example, a simple setting of uniformly setting center positions of the connection sides 301 as the interface positions may be performed. FIG. 4A and FIG. 4B show examples of the latter case.

With the above-mentioned method, the paths in which the pipes 4a and 4b are arranged are determined so as to correspond to the arrangement of the device groups 3, and the length of each of the pipes 4a and 4b can be calculated based on the coordinates of the paths. Then, the lengths of the pipes 4a and 4b for connecting the device groups 3 to each other are added for each type of pipe, and thus the total length of each of the pipes A and B can be calculated.

For example, in the example illustrated in FIG. 4A, the device groups 3 are arranged so that the pipes 4a and 4b are required to extend back and forth many times in the same area of the pipe-rack arrangement area 20 while the fluid flowing in from the position of IN flows out through the position of OUT. As a result, total lengths x₁ and y₁ of the respective pipes 4a and 4b tend to be increased.

In contrast, in the example illustrated in FIG. 4B, the number of times the pipes 4a and 4b extend back and forth in the same area of the pipe-rack arrangement area 20 is reduced, and total lengths x₂ and y₂ of the respective pipes 4a and 4b are relatively shorter.

After the total lengths of the various pipes 4a and 4b are calculated, the use amount or the cost of the pipe material per unit length is multiplied based on the pipe information set for each of the pipes A and B. In this manner, the total use amount or the total cost of the pipe material of the pipes 4a and 4b can be calculated in accordance with the difference in arrangement of the device groups 3.

As described above, the device arrangement method of this example uses the computer to repeatedly perform the above-mentioned calculation while changing the arrangement positions of the device groups 3, to thereby search for the arrangement of the device groups 3 having a smaller total use amount or total cost of the pipes 4a and 4b.

In the examples described with reference to FIG. 4A and FIG. 4B, for the sake of convenience in description, the number of device groups 3 to be arranged in the installation area 10 is limited to four, but in actuality, an optimum arrangement of a large number of device groups 3 as illustrated in FIG. 2 may be required to be searched for. Further, the arrangement of the device groups 3 also changes under the influence of the arrangement of the pipe racks 21, 22, and 23 (pipe-rack arrangement areas 20).

In those cases, in order to prevent the calculation amount of the computer from becoming excessively large, the optimum arrangement of the device groups 3 may be searched for with various restrictions described below being provided.

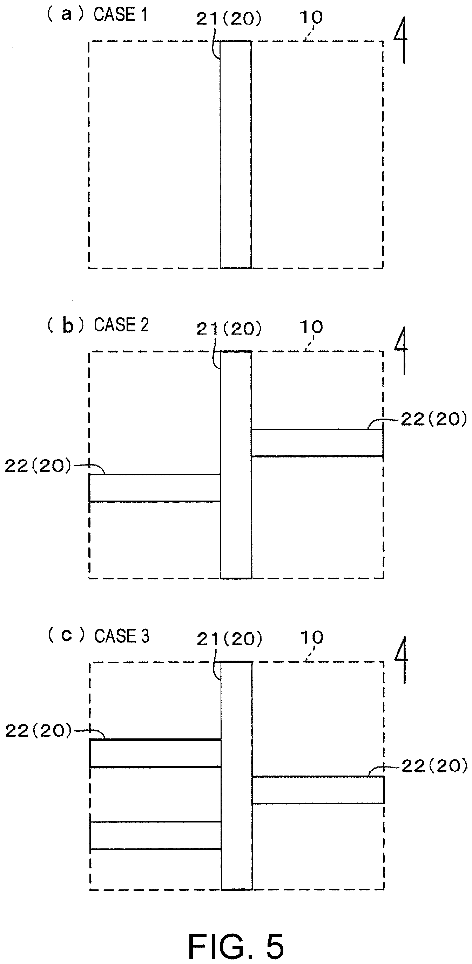

Parts (a) to (c) of FIG. 5 show examples of cases in which the number of main pipe racks 21 or sub-pipe racks 22 to be arranged and connection relationships of those pipe racks 21 and 22 are set in advance.

In the main pipe rack 21, short sides of the band-shaped pipe-rack arrangement area 20 are independently provided without being connected to other pipe racks. In the examples illustrated in parts (a) to (c) of FIG. 5, one main pipe rack 21 is provided along a short-side direction of the installation area 10 set to have a rectangular shape, so as to cross the inside of the installation area 10.

The arrangement direction of the main pipe rack 21, the lengths of the long side and the short side of the band-shaped pipe-rack arrangement area 20, and the number of main pipe racks 21 to be arranged are not limited to those of the examples of FIG. 5. For example, the main pipe rack 21 may be provided along a long-side direction of the installation area 10 set to have a rectangular shape, or the length of the long side of the main pipe rack 21 may be interrupted in the middle of crossing the installation area 10. Further, a plurality of main pipe racks 21 may be arranged in the installation area 10.

The sub-pipe rack 22 is a pipe rack in which a short side of the band-shaped pipe-rack arrangement area 20 is connected to a long side of the pipe-rack arrangement area 20 of the main pipe rack 21, and which extends in a direction of intersecting with the long side. Part (a) of FIG. 5 shows an example in which no sub-pipe rack 22 is provided. Further, part (b) of FIG. 5 shows an example in which one sub-pipe rack 22 is provided to each of a west long side and an east long side of the main pipe rack 21. Part (c) of FIG. 5 shows an example in which two sub-pipe racks 22 are provided to the west long side of the main pipe rack 21 and one sub-pipe rack 22 is provided to the east long side thereof.

In this case, the lengths of the long side and the short side of the pipe-rack arrangement area 20 of the sub-pipe rack 22 and the number of sub-pipe racks 22 to be arranged may also be changed for each case.

As exemplified in parts (a) to (c) of FIG. 5, there are prepared in advance a plurality of cases in which the pipe-rack arrangement areas 20 are set so as to vary in, as viewed from the main pipe rack 21, the direction of the long side to which the sub-pipe rack 22 is connected and the number of sub-pipe racks 22 to be connected to each long side (including the case of zero).

Meanwhile, fixing the arrangements of the main pipe racks 21 and the sub-pipe racks 22 only to those positions exemplified in FIG. 5 may cause an excessive restriction when an optimum arrangement of a large number of device groups 3 is searched for. In view of the above, there may be further prepared sub-cases in which the arrangement positions of the main pipe racks 21 and the sub-pipe racks 22 are changed.

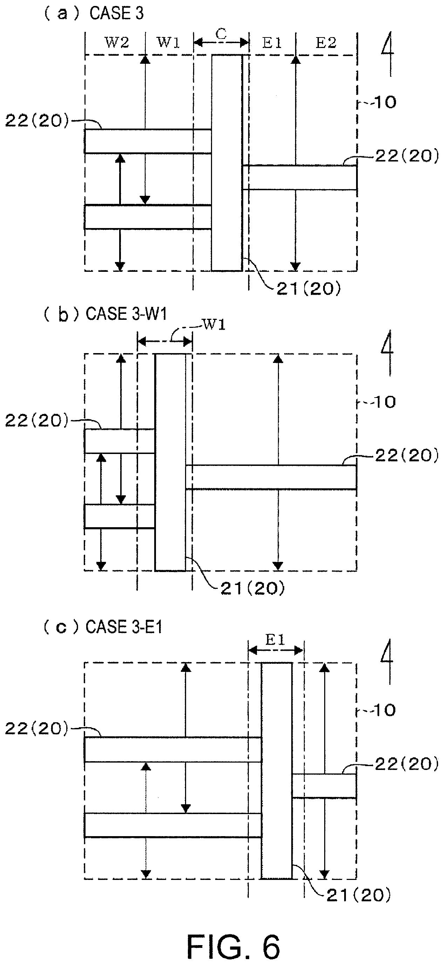

For example, part (a) of FIG. 6 is an illustration for re-posting the case 3 illustrated in part (c) of FIG. 5. In part (a) of FIG. 6, one side of an outline of the installation area 10 extending in a direction (east-west direction) of intersecting with the long side of the main pipe rack 21 is equally divided into five areas, and respective divided areas are denoted by reference symbols "W2, W1, C, E1, and E2." In this case, the main pipe rack 21 (pipe-rack arrangement area 20) illustrated in part (a) of FIG. 6 is set to be movable in the direction of intersecting with the long side thereof within a range of the divided area denoted by reference symbol C.

Further, in the example illustrated in part (a) of FIG. 6, the pipe-rack arrangement area 20 of the sub-pipe rack 22 is set to be movable in a direction of intersecting with the long side of the sub-pipe rack 22. However, on the west side as viewed from the main pipe rack 21 of part (a) of FIG. 6 (left side as one faces the drawing), two sub-pipe racks 22 are connected to the long side of the main pipe rack 21. When a plurality of sub-pipe racks 22 are connected as described above, the movable range of each sub-pipe rack 22 is limited to a range in which the pipe-rack arrangement area 20 of one sub-pipe rack 22 and the pipe-rack arrangement area 20 of another sub-pipe rack 22 do not overlap each other.

The movement of the position of each pipe-rack arrangement area 20 described above is executed by a computer when the optimum arrangement of the device groups 3 is searched for.

As compared to part (a) of FIG. 6 described above, parts (b) and (c) of FIG. 6 are different in that the pipe-rack arrangement area 20 of the main pipe rack 21 is arranged in a divided area denoted by reference symbol W1 or E1. Also in those sub-cases, the pipe-rack arrangement area 20 of the main pipe rack 21 is set to be movable in the direction of intersecting with the long side thereof within a range of the divided area denoted by reference symbol W1 or E1.

Meanwhile, the movable range of the pipe-rack arrangement area 20 of the sub-pipe rack 22 is set similarly to that of the example of part (a) of FIG. 6.

In addition to the examples illustrated in parts (b) and (c) of FIG. 6, there are prepared sub-cases (not shown) in which the pipe-rack arrangement area 20 of the main pipe rack 21 is set to be movable within a range of the divided area denoted by reference symbol W2 or E2, and the movable range of the pipe-rack arrangement area 20 of the sub-pipe rack 22 is set similarly to that of the example of part (a) of FIG. 6.

As described above, for the case of part (c) of FIG. 5, there are prepared in advance a plurality of sub-cases which are common in the number of main pipe racks 21 to be arranged, the direction of the long side on which the sub-pipe rack 22 is connected to the main pipe rack 21, and the number of sub-pipe racks 22 to be connected to each long side, but vary from one another in the arrangement position of the main pipe rack 21.

Further, the case is not limited to the case of part (c) of FIG. 5. Also for the cases illustrated in parts (a) and (b) of FIG. 5 and other cases, there are prepared a plurality of sub-cases which are different in the arrangement position of the main pipe rack 21 in the above-mentioned divided area (W2, W1, E1, or E2) .

Those cases and sub-cases are similar to the examples described with reference to parts (a) to (c) of FIG. 6 in that the pipe-rack arrangement area 20 of the main pipe rack 21 can be moved within the range of the divided area and the pipe-rack arrangement area 20 of the sub-pipe rack 22 can be moved within the range that does not overlap another sub-pipe rack 22.

In the device arrangement method of this example, the optimum arrangement of the device groups 3 is searched for through use of a computer for each of the plurality of cases and sub-cases described above. As described above, there are prepared in advance cases and sub-cases in which the number of main pipe racks 21 and sub-pipe racks 22 to be arranged, the connection relationships thereof, and the movable range of the pipe-rack arrangement area 20 are limited in advance. In this manner, the calculation amount can be reduced as compared to a case in which the searching for the optimum arrangement of the device groups 3 is started from a state in which those conditions are not defined at all.

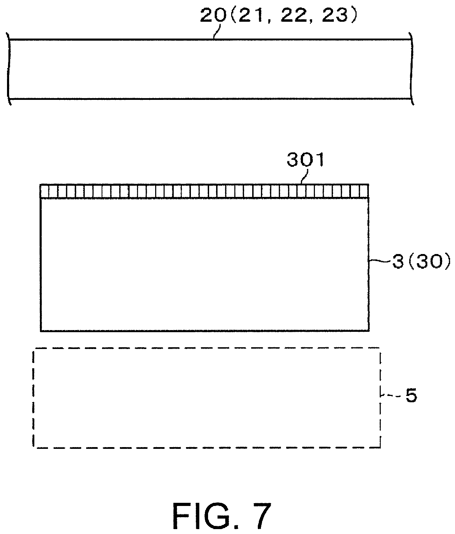

FIG. 7 is an illustration of an example in which the connection side 301 to be connected to the long side of the pipe rack 21, 22, or 23 (pipe-rack arrangement area 20) is set in advance with respect to the outer edge of the occupied area 30 of the device group 3.

When the connection side 301 is not set in advance conversely, any side of the occupied area 30 may be connected to the long side of the pipe rack 21, 22, or 23. However, when the connection side 301 is set in advance, the calculation amount of the computer can be reduced when the optimum arrangement of the device groups 3 is searched for.

Further, in FIG. 7, there is also illustrated an example in which a maintenance area 5 is provided in an area on the opposite side of the connection side 301 across the occupied area 30. The maintenance area 5 is an area to which the device 31 arranged in the device group 3 is carried out at the time of maintenance, and which has none of the occupied area 30 and the pipe-rack arrangement area 20 of another device group 3 provided therein.

Further, in the occupied area 30 in which the connection side 301 is not set in advance, a side selected to be connected to the long side of the pipe rack 21, 22, or 23 (pipe-rack arrangement area 20) is set as the connection side. Then, the above-mentioned maintenance area 5 may be provided in an area on the opposite side of this connection side across the occupied area 30. This point is similar to that of the example illustrated in FIG. 7.

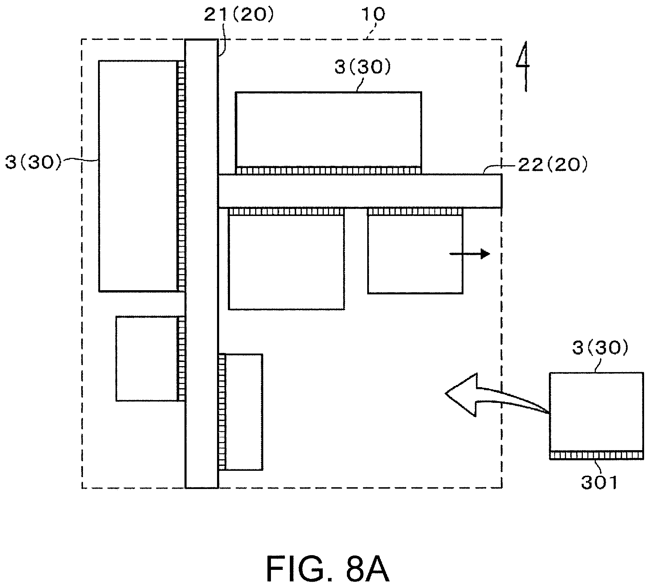

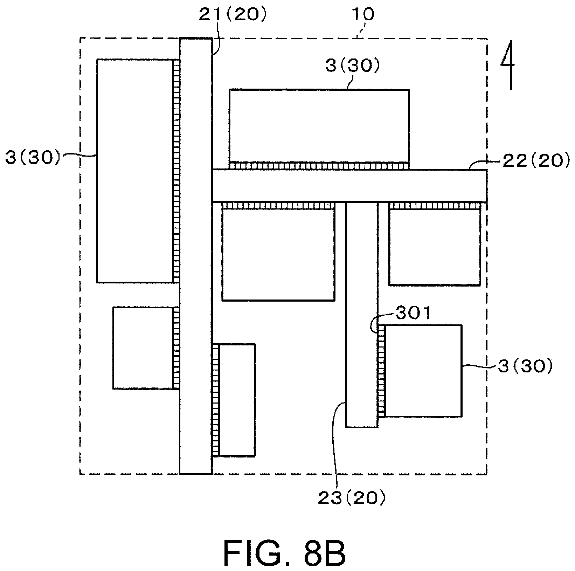

In addition, as illustrated in FIG. 8A, when a device group 3 is to be arranged in an available space of the installation area 10, there may be no main pipe rack 21 or sub-pipe rack 22 to which the corresponding device group 3 can be connected. In such a case, the pipe-rack arrangement area 20 of the sub-sub-pipe rack 23 configured to be connected to a long side of the sub-pipe rack 22 and extend in a direction of intersecting with the long side may be generated, and the device group 3 may be connected to a long side of the generated sub-sub-pipe rack 23 (FIG. 8B). This operation is executed when the optimum arrangement of the device groups 3 is searched for.

In light of the restrictions and the installation cases of the main pipe racks 21 and the sub-pipe racks 22 described above, in the device arrangement method of this example, the arrangement positions of the occupied areas 30 of the plurality of device groups 3 and the arrangement positions of the pipe-rack arrangement areas 20 of the pipe racks 21, 22, and 23 are set as variable parameters. In other words, in the installation area 10, coordinate ranges to be occupied by the occupied areas 30 and the pipe-rack arrangement areas 20 are set as variable parameters.

Then, the variable parameters are changed for each of the cases and sub-cases prepared in advance. Thus, for each of the cases and sub-cases, the arrangement of the device groups 3 having a smaller total use amount or total cost of the pipes 4 is searched for.

The searching for the arrangement of the device groups 3 satisfying such conditions can be executed by a computer through use of commercially-available and general-purpose optimization software. Examples of such software include modeFRONTIER of ESTECO, HyperStudy of Altair, Optimas of Noesis Solutions, and HEED of Red Cedar Technology. In this case, it is not an essential requirement to execute the searching for the optimum arrangement of the device groups 3 through use of general optimization software, and the optimal arrangement may be searched for through use of a specifically-developed search tool.

The optimum arrangement can be searched for through use of such optimization software or search tool by means of a genetic algorithm or a particle swarm optimization method. As specific examples of the algorithm for executing those optimization methods, there can be exemplified Neighborhood Cultivation Genetic Algorithm (NCGA), Normal Boundary Intersection (NBI), and Indirect Optimization on the basis of Self-Organization (IOSO). However, the searching for the optimum arrangement is not limited to the case of using those exemplified methods, and any method that can search for the arrangement of the device groups 3 having a small total use amount or total cost of the pipes 4 can be used.

Further, in the device arrangement method of this example, the computer, which is configured to search for the optimum arrangement of the device groups 3 by means of the above-mentioned method, selects, from the found arrangements of the device groups 3, a plurality of arrangements having smaller total use amounts or total costs of the pipe materials of the pipes 4, and outputs the selected arrangements to a user.

As the arrangements to be selected, a preset number of arrangements may be output in the order of a smaller target value (total use amount or total cost) among the respective cases (including the sub-cases). Further, all arrangements having a target value smaller than a threshold value set in advance may be selected and output.

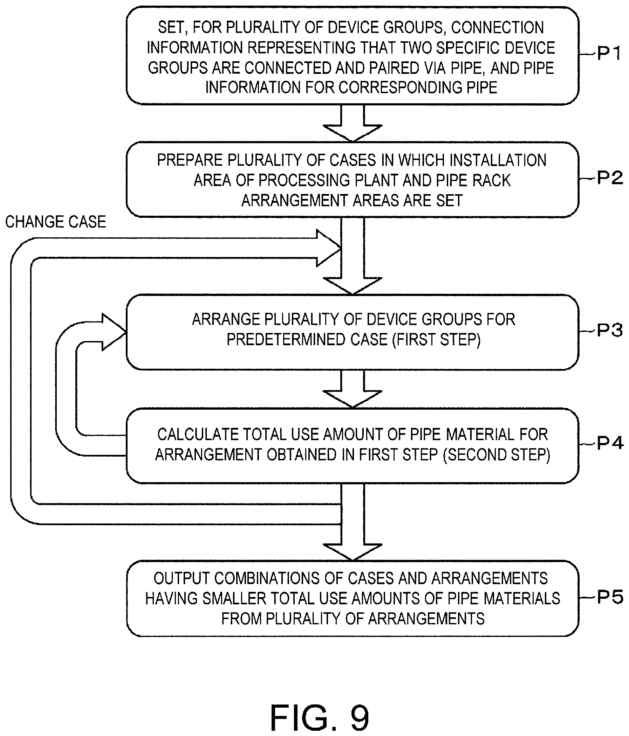

FIG. 9 is an example of a procedure of executing the device arrangement method of this example.

First, the plurality of devices 31 included in the processing plant 1 are divided into a plurality of device groups 3 in advance, and the area and the outer-edge shape of the occupied area 30 are determined in advance for each device group 3.

After that, for the plurality of device groups 3, the connection information representing that two specific device groups 3 are paired via the pipe 4 and the pipe information for the corresponding pipe 4 are set based on the way of thinking described with reference to FIG. 3 (processing P1 of FIG. 9).

Then, there are prepared a plurality of cases (including sub-cases, the same holds true hereinafter in the description of FIG. 9) in which the installation area 10 of the processing plant 1 and the pipe-rack arrangement areas 20 are set, which have been described with reference to FIG. 5 and FIG. 6 (processing P2 of FIG. 9) .

After that, for a predetermined case, the plurality of device groups 3 are arranged in the installation area 10 with the arrangement positions of the occupied areas 30 and the pipe-rack arrangement areas 20 being set as variable parameters (processing P3 of FIG. 9: first step).

At this time, for example, when an area for arranging the occupied area 30 cannot be secured, the arrangement positions of the pipe-rack arrangement areas 20 may be changed within a range of the restriction described with reference to FIG. 6. Further, the pipe-rack arrangement area 20 of the sub-sub-pipe rack 23 may be generated based on the way of thinking described with reference to FIG. 8A and FIG. 8B.

Then, for the arrangement of the device groups 3 obtained in the first step, the total use amount or the total cost (target value) of the pipe material of the pipes 4 is calculated based on the above-mentioned connection information and pipe information (processing P4 of FIG. 9: second step).

After that, the first and second steps are repeated until an end condition set in advance namely a case in which, during a predetermined repetitive calculation period, an arrangement of the device groups 3 having a target value smaller than those of other arrangements cannot be found any more, is satisfied.

Further, when the first and second steps are executed, for example, as in the case 1 of part (a) of FIG. 5, it may be found that a total extension of the long side of the main pipe rack 21 is short and thus the connection sides 301 of all of the occupied areas 30 illustrated in FIG. 2 cannot be connected thereto. In this case, the searching for the optimum arrangement may be ended at this time point, and information on this fact may be output.

For the case for which the searching is thus executed, when the end condition is achieved, a plurality of arrangements of the device groups 3 having small target values are stored. After that, the execution of the above-mentioned first and second steps is repeated while changing the case for which the optimum arrangement is searched for.

After the searching for the optimum arrangement of the device groups 3 is completed for all of the prepared cases, combinations of cases and arrangements of the device groups 3 having smaller total use amounts or total costs of the pipe materials, which have been stored, are output (processing P5 of FIG. 9).

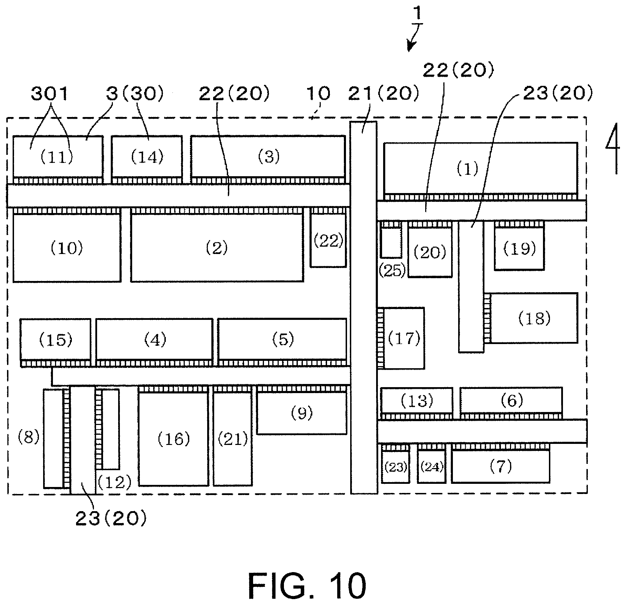

From the plurality of output arrangements of the device groups 3, the user selects a more realistic arrangement of the device groups 3 in consideration of restrictions such as maintenance management and safety management, and cost factors other than the total use amount or the total cost of the pipe material. After that, the arrangement of the device groups 3 is adjusted in light of also the various restrictions described above. As a result, as illustrated in FIG. 10, the arrangement of the plurality of device groups 3 with respect to the installation area 10 illustrated in FIG. 2 is determined.

The arrangement of the devices 31 included in the processing plant 1 is determined based on the arrangement of the device groups 3 determined as described above, and the processing plant 1 is constructed based on this arrangement.

According to the device arrangement method of this embodiment, regarding the arrangement of the device groups 3 obtained by dividing a large number of devices 31 included in the processing plant 1, the computer obtains arrangements having small total use amounts or total cost of pipe materials. As a result, while the load of the work required for determining the device arrangement is reduced, the economic efficiency of the determined device arrangement can be quantitatively grasped.

In this case, it is not an essential requirement to prepare in advance the cases described with reference to FIG. 5 to search for the optimum arrangement of the device groups 3. In addition to the arrangement positions of the device groups 3, the arrangement positions of the pipe-rack arrangement areas 20 of the various pipe racks 21, 22, and 23 may be searched for through use of the computer.

Conversely, for example, as in the example illustrated in FIG. 4A, an initial arrangement of the device groups 3 (occupied areas 30) and the various pipe racks 21 and 22 (pipe-rack arrangement areas 20) may be set, and the computer may search for an arrangement of the device groups 3 having a total use amount or the like of the pipe material smaller than that of the initial arrangement.

Further, it is not essential to set each pipe-rack arrangement area 20 to be movable in each of the cases and sub-cases described with reference to FIG. 6. For example, the optimum arrangement of the device groups 3 in each of the cases (including the sub-cases) may be searched for under a condition in which the position of the pipe-rack arrangement area 20 is fixed. After that, the optimum arrangement of the device groups 3 may be searched for again under a condition in which the pipe-rack arrangement area 20 is movable in a specific case or sub-case having a smaller total use amount or the like of the pipe material.

Still further, when the processing plant 1 is constructed, it is not essential to arrange all of the pipes that have been arranged in the pipe racks 21, 22, and 23 when the optimum arrangement is searched for even in the pipe racks 21, 22, and 23 in the actual processing plant 1. For example, between devices 31 included in device groups 3 whose occupied areas 30 are arranged adjacent to each other, the pipe may connect those devices 31 without passing through the pipe rack 21, 22, or 23. It may be possible to further reduce the length of the pipe 4 as compared to a case in which the pipe 4 is routed from the arrangement position of each device 31 to the pipe rack 21, 22, or 23.

### Reference Signs List

- 1: processing plant

- 10: installation area
- 20: pipe-rack arrangement area
- 21: main pipe rack
- 22: sub-pipe rack
- 23: sub-sub-pipe rack
- 3, 3a, 3b: device group
- 30: occupied area
- 31: device
- 4, 4a, 4b: pipe

## Claims

1. A method of arranging devices (31) of a processing plant (1) configured to process fluid, **characterized by**, the method comprising steps of:
dividing a plurality of devices (31) included in the processing plant (1) into a plurality of device groups (3) which are distinguishable from one another, and each include at least one device (31) and each have set therefor an occupied area (30) including an arrangement area for the at least one device (31), and setting, for the plurality of device groups (3), connection information representing that, in order to transfer the fluid between each device (31) included in one device group (3) and a counterpart device (31)included in another device group (3), two specific device groups (3) are connected and paired via a pipe (4), and pipe information required for calculating a use amount of a pipe material per unit length of the pipe (4) corresponding to the connection information;
setting an installation area (10) of the processing plant (1), and a pipe-rack arrangement area (20) having a band-like planar shape of a pipe rack (21, 22, 23) to be provided in the installation area (10) to support the pipe; and
repeatedly executing, by a computer, a first step and a second step while changing an arrangement of the plurality of device groups (3) to obtain a plurality of arrangements, and selecting a plurality of arrangements having small total use amounts of the pipe materials from the obtained plurality of arrangements,
the first step including arranging the plurality of device groups (3) in the installation area (10) so that an outer edge of the occupied area (30) of the one device group (3) is brought into contact with a long side of the pipe-rack arrangement area (20) having the band-like planar shape and so that the occupied area (30) of the one device group (3) and the occupied area (30) of another device group (3) are prevented from overlapping each other,
the second step including calculating, for the arrangement of the plurality of device groups (3), the total use amount of the pipe material of the pipe (4) to be supported by the pipe rack (21, 22, 23) based on a position at which the outer edge of each occupied area (30) is brought into contact with the long side and on the connection information,
wherein the first step and the second step are repeated until an arrangement of the plurality of device groups (3) having a total use amount of the pipe materials smaller than total use amounts of other arrangements is not able to be found.

2. The method of arranging the devices (31) of the processing plant (1) according to claim 1, wherein the step of selecting the arrangements having the small total use amounts of the pipe materials comprises executing a step of changing the arrangement of the plurality of device groups (3) by means of a genetic algorithm or a particle swarm optimization method, to thereby select arrangements having smaller total use amounts of the pipe materials.

3. The method of arranging the devices (31) of the processing plant (1) according to claim 1,
wherein the step of setting the installation area (10) and the pipe-rack arrangement area (20) comprises setting a plurality of cases which are different in at least one of an arrangement position of the pipe-rack arrangement area (20) or the number of the pipe-rack arrangement area (20) to be arranged, and
wherein the method further comprises executing a step of selecting the arrangements having the small total use amounts of the pipe materials for each of the plurality of cases, and selecting, from selection results of the arrangements of the plurality of cases, a plurality of combinations of the cases and the arrangements having the smaller total use amounts of the pipe materials.

4. The method of arranging the devices (31) of the processing plant (1) according to claim 3,
wherein, in the installation area (10), pipe-rack arrangement areas (20) of a main pipe rack (21) and a sub-pipe rack (22) serving as the pipe rack (21, 22, 23) are allowed to be set, the sub-pipe rack (22) being configured to be connected to a long side of the main pipe rack (21) and extend in a direction of intersecting with the long side, and
wherein the plurality of cases comprise cases in which the pipe-rack arrangement areas (20) are set so as to vary in, as viewed from the main pipe rack (21), a direction of the long side thereof to which the sub-pipe rack (22) is connected and the number of sub-pipe racks (22) to be connected to each long side, the number including a case of zero.

5. The method of arranging the devices (31) of the processing plant (1) according to claim 4, wherein the plurality of cases further include cases which are common in, as viewed from the main pipe rack (21), the direction of the long side thereof to which the sub-pipe rack (22) is connected and the number of sub-pipe racks (22) to be connected to each long side, the number including the case of zero, but vary from one another in an arrangement position of the main pipe rack (21) in the direction of intersecting with the long side.

6. The method of arranging the devices (31) of the processing plant (1) according to claim 4,
wherein, in the plurality of cases, the pipe-rack arrangement area (20) of the main pipe rack (21) is set to be movable within a range set in advance in the direction of intersecting with the long side, and the pipe-rack arrangement area (20) of the sub-pipe rack (22) is set to be movable in a direction of intersecting with a long side of the sub-pipe rack (22), which is limited to a range in which, when a plurality of sub-pipe racks (22) are connected to the main pipe rack (21), a pipe-rack arrangement area (20) of one sub-pipe rack (22) and a pipe-rack arrangement area (20) of another sub-pipe rack (22) are prevented from overlapping each other, and
wherein, when the first step is executed with the arrangement of the plurality of device groups (3) being changed, arrangement positions of the pipe-rack arrangement areas (20) of the main pipe rack (21) and the sub-pipe rack (22) are allowed to be changed.

7. The method of arranging the devices (31) of the processing plant (1) according to claim 4, wherein, when the first step is executed with the arrangement of the plurality of device groups (3) being changed, a pipe-rack arrangement area (20) of a sub-sub-pipe rack (23) serving as the pipe rack (21, 22, 23) is allowed to be generated, the sub-sub-pipe rack (23) being connected to a long side of the sub-pipe rack (22) and extending in a direction of intersecting with the long side of the sub-pipe rack (22).

8. The method of arranging the devices (31) of the processing plant (1) according to claim 1, wherein, in the plurality of device groups (3), a connection side to be connected to a long side of the pipe rack (21, 22, 23) is set in advance with respect to the outer edge of each occupied area (30).

9. The method of arranging the devices (31) of the processing plant (1) according to claim 1, wherein, when the plurality of device groups (3) are arranged in the first step, a maintenance area (5) is provided in an area on an opposite side across the occupied area (30) of a connection side (301) to be connected to a long side of the pipe rack (21, 22, 23), the maintenance area (5) being an area to which a device (31) arranged in the one device group (3) is carried out at a time of maintenance, and which has none of the occupied area (30) and the pipe-rack arrangement area (20) of another device group (3) provided therein.

10. The method of arranging the devices (31) of the processing plant (1) according to claim 1,
wherein the pipe information comprises information required for calculating a cost per unit length of the pipe (4) as the use amount of the pipe material, and
wherein the second step comprises calculating a total cost of the pipe material as the total use amount of the pipe material of the pipe (4) to be supported by the pipe rack (21, 22, 23).

11. A method of manufacturing a processing plant (1) configured to process fluid, **characterized by**, the method comprising a step of arranging a plurality of device groups (3) based on an arrangement included in a plurality of arrangements having small total use amounts of pipe materials, which are selected by the method of arranging the devices (31) of the processing plant (1) of claim 1, to thereby manufacture the processing plant (1).

## Patentansprüche

1. Verfahren zum Anordnen von Vorrichtungen (31) einer Verarbeitungsanlage (1), die zum Verarbeiten von Fluid konfiguriert ist, **dadurch gekennzeichnet, dass** das Verfahren die Schritte umfasst von:
Unterteilen einer Vielzahl von Vorrichtungen (31), die in der Verarbeitungsanlage (1) enthalten sind, in eine Vielzahl von Vorrichtungsgruppen (3), die voneinander unterscheidbar sind und jeweils mindestens eine Vorrichtung (31) enthalten und für jede dafür einen belegten Bereich (30) festgelegt hat, der einen Anordnungsbereich für die mindestens eine Vorrichtung (31) enthält,
und Festlegen, für die Vielzahl von Vorrichtungsgruppen (3), von Verbindungsinformationen, die dies darstellen, um das Fluid zwischen jeder Vorrichtung (31), die in einer Vorrichtungsgruppe (3) enthalten ist, und einer Gegenvorrichtung (31), die in einer anderen Vorrichtungsgruppe (3) enthalten ist, zu übertragen, zwei spezifische Vorrichtungsgruppen (3) über ein Rohr (4) verbunden und gepaart sind, und Rohrinformationen, die zum Berechnen einer Verbrauchsmenge eines Rohrmaterials pro Längeneinheit des Rohrs (4) entsprechend den Verbindungsinformationen erforderlich sind;
Festlegen eines Installationsbereichs (10) der Verarbeitungsanlage (1) und eines Rohrgestell-Anordnungsbereichs (20) mit einer bandartigen ebenen Form eines Rohrgestells (21, 22, 23), das in dem Installationsbereich (10) bereitzustellen ist, um das Rohr zu tragen; und
wiederholtes Ausführen eines ersten Schritts und eines zweiten Schritts durch einen Computer, während eine Anordnung der Vielzahl von Vorrichtungsgruppen (3) geändert wird, um eine Vielzahl von Anordnungen zu erhalten, und Auswählen einer Vielzahl von Anordnungen mit kleinen Gesamtverbrauchsmengen der Rohrmaterialien aus der erhaltenen Vielzahl von Anordnungen,
der erste Schritt Anordnen der Vielzahl von Vorrichtungsgruppen (3) in dem Installationsbereich (10) enthält, so dass eine Außenkante des belegten Bereichs (30) der einen Vorrichtungsgruppe (3) in Kontakt mit einer Längsseite des Rohrgestell-Anordnungsbereichs (20) gebracht wird, der die bandartige ebene Form aufweist, und so dass der belegte Bereich (30) der einen Vorrichtungsgruppe (3) und der belegte Bereich (30) einer anderen Vorrichtungsgruppe (3) daran gehindert werden, einander zu überlappen,
der zweite Schritt Berechnen, für die Anordnung der Vielzahl von Vorrichtungsgruppen (3), der Gesamtnutzungsmenge des Rohrmaterials des Rohres (4) enthält, das von dem Rohrgestell (21, 22, 23) getragen werden soll, basierend auf einer Position, an der die Außenkante jedes belegten Bereichs (30) in Kontakt mit der Längsseite gebracht wird, und auf den Verbindungsinformationen,
wobei der erste Schritt und der zweite Schritt wiederholt werden, bis eine Anordnung der Vielzahl von Vorrichtungsgruppen (3) mit einer Gesamtverwendungsmenge der Rohrmaterialien, die kleiner als die Gesamtverwendungsmengen anderer Anordnungen ist, nicht gefunden werden kann.

2. Verfahren zum Anordnen der Vorrichtungen (31) der Verarbeitungsanlage (1) gemäß Anspruch 1, wobei der Schritt des Auswählens der Anordnungen mit den kleinen Gesamtverbrauchsmengen der Rohrmaterialien Ausführen eines Schritts des Änderns der Anordnung der Vielzahl von Vorrichtungsgruppen (3) mittels eines genetischen Algorithmus oder eines Partikelschwarm-Optimierungsverfahrens umfasst, um dadurch Anordnungen mit kleineren Gesamtverbrauchsmengen der Rohrmaterialien auszuwählen.

3. Verfahren zum Anordnen der Vorrichtungen (31) der Verarbeitungsanlage (1) gemäß Anspruch 1, wobei der Schritt des Festlegens des Installationsbereichs (10) und des Rohrgestell-Anordnungsbereichs (20) Festlegen einer Vielzahl von Fällen umfasst, die sich in mindestens in einer von einer Anordnungspositionen des Rohrgestell-Anordnungsbereichs (20) oder der Anzahl der anzuordnenden Rohrgestell-Anordnungsbereiche (20) unterscheiden, und
wobei das Verfahren ferner Ausführen eines Schritts des Auswählens der Anordnungen mit den kleinen Gesamtverbrauchsmengen der Rohrmaterialien für jeden der Vielzahl von Fällen und
Auswählen, aus den Auswahlergebnissen der Anordnungen der Vielzahl von Fällen, einer Vielzahl von Kombinationen der Fälle und der Anordnungen mit den kleineren Gesamtverbrauchsmengen der Rohrmaterialien umfasst.

4. Verfahren zum Anordnen der Vorrichtungen (31) der Verarbeitungsanlage (1) gemäß Anspruch 3,
wobei in dem Installationsbereich (10), Rohrgestell-Anordnungsbereiche (20) eines Hauptrohrgestells (21) und eines Unter-Rohrgestells (22), dienend als das Rohrgestell (21, 22, 23), eingestellt werden können, wobei das Unter-Rohrgestell (22) konfiguriert ist, um mit einer Längsseite des Hauptrohrgestells (21) verbunden zu sein und sich in einer Richtung erstreckt, in der es sich mit der Längsseite schneidet, und
wobei die Vielzahl von Fällen Fälle umfasst, in denen die Rohrgestell-Anordnungsbereiche (20) so eingestellt sind, dass sie, von dem Hauptrohrgestell (21) aus gesehen, in einer Richtung der Längsseite davon, mit der das Unter-Rohrgestell (22) verbunden ist, und in der Anzahl von Unter-Rohrgestellen (22), die mit jeder Längsseite zu verbinden sind, sich unterscheiden, wobei die Anzahl einen Fall von Null enthält.

5. Verfahren zum Anordnen der Vorrichtungen (31) der Verarbeitungsanlage (1) gemäß Anspruch 4, wobei die Vielzahl von Fällen ferner Fälle umfasst, die gleich sind, wenn betrachtet von dem Hauptrohrgestell (21), in der Richtung der Längsseite davon, an die das Unter-Rohrgestell (22) verbunden ist, und in der Anzahl der Unter-Rohrgestelle (22), die an jede Längsseite verbunden werden sollen, wobei die Anzahl, die den Fall Null enthält, sich aber voneinander in einer Anordnungsposition des Hauptrohrgestells (21) in der Richtung des Schneidens mit der Längsseite unterscheiden.

6. Verfahren zum Anordnen der Vorrichtungen (31) der Verarbeitungsanlage (1) gemäß Anspruch 4,
wobei in der Vielzahl von Fällen der Rohrgestell-Anordnungsbereich (20) des HauptRohrgestells (21) so festgelegt wird, dass er innerhalb eines im Voraus festgelegten Bereichs in Richtung des Schneidens mit der Längsseite bewegbar ist, und der Rohrgestell-Anordnungsbereich (20) des Unter-Rohrgestells (22) so eingestellt wird, dass er in einer Richtung des Schneidens mit einer Längsseite des Unter-Rohrgestells (22) bewegbar ist, die auf einen Bereich begrenzt ist, in dem, wenn eine Vielzahl von Unter-Rohrgestellen (22) mit dem Hauptrohrgestell (21) verbunden ist, ein Rohrgestell-Anordnungsbereich (20) eines Unter-Rohrgestells (22) und ein Rohrgestell-Anordnungsbereich (20) eines anderen Unter-Rohrgestells (22) daran gehindert werden, sich gegenseitig zu überlappen, und wobei, wenn der erste Schritt mit der Anordnung der Vielzahl von Vorrichtungsgruppen (3), die geändert werden, ausgeführt wird, die Anordnungspositionen der Rohrgestell-Anordnungsbereichs (20) des Hauptrohrgestells (21) und des Unter-Rohrgestells (22) geändert werden können.

7. Verfahren zum Anordnen der Vorrichtungen (31) der Verarbeitungsanlage (1) gemäß Anspruch 4, wobei, wenn der erste Schritt mit der Anordnung der Vielzahl von Vorrichtungsgruppen (3), die geändert werden, ausgeführt wird, ein Rohrgestell-Anordnungsbereich (20) eines Unter-Unter-Rohrgestells (23), das als das Rohrgestell (21, 22, 23) dient, erzeugt werden kann, das Unter-Unter-Rohrgestell (23) mit einer Längsseite des Unter-Rohrgestells (22) verbunden ist und sich in einer Richtung erstreckt, in der es sich mit der Längsseite des Unter-Rohrgestells (22) schneidet.

8. Verfahren zum Anordnen der Vorrichtungen (31) der Verarbeitungsanlage (1) gemäß Anspruch 1, wobei in der Vielzahl von Vorrichtungsgruppen (3) eine Verbindungsseite, die mit einer Längsseite des Rohrgestells (21, 22, 23) zu verbinden ist, im Voraus in Bezug auf den äußeren Rand jedes belegten Bereichs (30) festgelegt wird.

9. Verfahren zum Anordnen der Vorrichtungen (31) der Verarbeitungsanlage (1) gemäß Anspruch 1, wobei, wenn die Vielzahl von Vorrichtungsgruppen (3) in dem ersten Schritt angeordnet werden, ein Wartungsbereich (5) in einem Bereich auf einer gegenüberliegenden Seite über den belegten Bereich (30) einer Verbindungsseite (301), die verbunden werden soll mit einer Längsseite des Rohrgestells (21, 22, 23), bereitgestellt wird, wobei der Wartungsbereich (5) ein Bereich ist, in dem eine Vorrichtung (31), angeordnet in der einen Vorrichtungsgruppe (3) zu einer Zeit der Wartung ausgeführt wird, und der weder den belegten Bereich (30) noch den Rohrgestell-Anordnungsbereich (20) einer anderen Vorrichtungsgruppe (3) darin bereitgestellt ist.

10. Verfahren zum Anordnen der Vorrichtungen (31) der Verarbeitungsanlage (1) gemäß Anspruch 1,
wobei die Rohrinformationen Informationen umfassen, die zur Berechnung der Kosten pro Längeneinheit des Rohres (4) als die Verbrauchsmenge des Rohrmaterials erforderlich sind, und
wobei der zweite Schritt Berechnen von Gesamtkosten des Rohrmaterials als die Gesamtverbrauchsmenge des Rohrmaterials des Rohrs (4), das von dem Rohrgestell (21, 22, 23) getragen werden soll, umfasst.

11. Verfahren zum Herstellen einer Verarbeitungsanlage (1), die zum Verarbeiten von Fluid konfiguriert ist, **dadurch gekennzeichnet, dass** das Verfahren einen Schritt des Anordnens einer Vielzahl von Vorrichtungsgruppen (3) basierend auf einer Anordnung umfasst, die in einer Vielzahl von Anordnungen mit kleinen Gesamtverbrauchsmengen von Rohrmaterialien enthalten ist, die durch das Verfahren zum Anordnen der Vorrichtungen (31) der Verarbeitungsanlage (1) gemäß Anspruch 1 ausgewählt werden, um dadurch die Verarbeitungsanlage (1) herzustellen.

## Revendications

1. Procédé d'agencement de dispositifs (31) d'une usine de traitement (1) configurée pour traiter un fluide, **caractérisé en ce que** le procédé comprend les étapes suivantes consistant à :
diviser une pluralité de dispositifs (31) inclus dans l'usine de traitement (1) en une pluralité de groupes de dispositifs (3) qui se distinguent les uns des autres, et comprennent chacun au moins un dispositif (31) et possèdent chacun une zone occupée pour celui-ci (30) comprenant une zone d'agencement pour ledit au moins un dispositif (31), et définir, pour la pluralité de groupes de dispositifs (3), des informations de connexion représentant cela, afin de transférer le fluide entre chaque dispositif (31) inclus dans un groupe de dispositifs (3) et un dispositif homologue (31) inclus dans un autre groupe de dispositifs (3), deux groupes de dispositifs spécifiques (3) sont connectés et appariés via un tuyau (4), et les informations de tuyau requises pour calculer une quantité d'utilisation d'un matériau de tuyau par unité de longueur du tuyau (4) correspondant aux informations de connexion ;
définir une zone d'installation (10) de l'usine de traitement (1) et une zone d'agencement de support de tuyaux (20) ayant une forme plane en forme de bande d'un support de tuyaux (21, 22, 23) à prévoir dans la zone d'installation (10) pour soutenir le tuyau; et
exécuter de manière répétée, par un ordinateur, une première étape et une deuxième étape tout en modifiant un agencement de la pluralité de groupes de dispositifs (3) pour obtenir une pluralité d'agencements et sélectionner une pluralité d'agencements ayant de petites quantités totales d'utilisation des matériaux de tuyau de la pluralité obtenue de la première étape consiste à disposer la pluralité de groupes de dispositifs (3) dans la zone d'installation (10) de telle sorte qu'un bord extérieur de la zone occupée (30) du groupe de dispositifs (3) soit mis en contact avec un côté long de la zone d'agencement de support de tuyaux (20) ayant la forme plane en forme de bande et de telle sorte que la zone occupée (30) d'un groupe d'appareils (3) et la zone occupée (30) d'un autre groupe d'appareils (3) ne peuvent pas se superposer l'un l'autre,
la deuxième étape consistant à calculer, pour l'agencement de la pluralité de groupes de dispositifs (3), la quantité totale utilisée du matériau de tuyau du tuyau (4) devant être supporté par le support de tuyaux (21, 22, 23) sur la base d'une position à laquelle le bord extérieur de chaque zone occupée (30) est mis en contact avec le grand côté et de l'information de connexion,
dans lequel la première étape et la deuxième étape sont répétées jusqu'à ce qu'un agencement de la pluralité de groupes de dispositifs (3) ayant une quantité totale d'utilisation des matériaux de tuyau inférieure à la quantité totale d'utilisation d'autres agencements ne puisse pas être trouvé.

2. Procédé d'agencement des dispositifs (31) de l'usine de traitement (1) selon la revendication 1, dans lequel l'étape de sélection des agencements ayant les petites quantités totales utilisées de matériaux de tuyau comprend l'exécution d'une étape de modification de l'agencement de la pluralité de groupes de dispositifs (3) au moyen d'un algorithme génétique ou d'un procédé d'optimisation d'essaim particulaire, pour sélectionner ainsi des agencements ayant des quantités totales d'utilisation de matériaux de tuyau plus faibles.

3. Procédé d'agencement des dispositifs (31) de l'usine de traitement (1) selon la revendication 1,
dans lequel l'étape de définition de la zone d'installation (10) et de la zone d'agencement de support de tuyaux (20) comprend le réglage d'une pluralité de boîtiers qui sont différents dans au moins une position parmi une position d'agencement de la zone d'agencement de support de tuyaux (20) ou le numéro de la zone d'agencement de support de tuyaux (20) à aménager et
le procédé comprenant en outre l'exécution d'une étape de sélection des agencements ayant les petites quantités totales d'utilisation des matériaux de tuyau pour chacun de la pluralité de boîtiers, et la sélection, à partir des résultats de sélection des agencements de la pluralité de boîtiers, d'une pluralité de combinaisons de boîtiers et les agencements ayant les plus petites quantités totales d'utilisation des matériaux de tuyau.

4. Procédé d'agencement des dispositifs (31) de l'usine de traitement (1) selon la revendication 3,
dans lequel, dans la zone d'installation (10), des zones d'agencement de support de tuyaux (20) d'un support de tuyaux principal (21) et d'un sous-support de tuyaux (22) servant de support de tuyaux (21, 22, 23) peuvent être installés, le sous-support de tuyaux (22) étant configuré pour être connecté à un côté long du support de tuyaux principal (21) et s'étendre dans une direction d'intersection avec le côté long, et
dans lequel la pluralité de boîtiers comprend des boîtiers dans lesquels les zones d'agencement de support de tuyaux (20) sont définies de manière à varier, vu depuis le support de tuyaux principal (21), une direction du côté long de celui-ci auquel le sous-support de tuyaux (22) est connecté et le nombre de sous-supports de tuyaux (22) à connecter à chaque côté long, le nombre incluant un boîtier de zéro.

5. Procédé d'agencement des dispositifs (31) de l'usine de traitement (1) selon la revendication 4, dans lequel la pluralité de boîtiers comprend en outre des boîtiers qui sont communs, vu depuis le support de tuyaux principal (21), dans la direction du côté long de celui-ci auquel le support de sous-tuyaux (22) est connecté et le nombre de sous-supports de tuyaux (22) à connecter à chaque côté long, le nombre incluant le boîtier de zéro, mais varient les uns des autres dans une position de disposition du support de tuyaux principal (21) dans la direction d'intersection avec le côté long.

6. Procédé d'agencement des dispositifs (31) de l'usine de traitement (1) selon la revendication 4,
dans lequel, dans la pluralité de boîtiers, la zone d'agencement de support de tuyaux (20) du support à tuyaux principal (21) est réglée pour être mobile dans une plage définie à l'avance dans la direction d'intersection avec le côté long, et la zone d'agencement de support de tuyaux (20) du support de sous-tuyaux (22) est définie pour être mobile dans une direction d'intersection avec un côté long du support de sous-tuyaux (22), qui est limitée à une plage dans laquelle, lorsqu'une pluralité de sous-supports de tuyaux (22) sont connectés au support de tuyaux principal (21), une zone d'agencement de support de tuyaux (20) d'un sous-support de tuyau (22) et une zone d'agencement de support de tuyaux (20) d'un autre sous-support de tuyau (22) ne peuvent pas se superposer, et
dans lequel, lorsque la première étape est exécutée avec la modification de l'agencement de la pluralité de groupes de dispositifs (3), les positions d'agencement des zones d'agencement de support de tuyaux (20) du support de tuyaux principal (21) et du sous-support de tuyau (22) peuvent être modifiés.

7. Procédé d'agencement des dispositifs (31) de l'usine de traitement (1) selon la revendication 4, dans lequel, lorsque la première étape est exécutée avec la modification de l'agencement de la pluralité de groupes de dispositifs (3), une zone d'agencement de support de tuyaux (20) d'un sous-sous-support de tuyaux (23) servant de support de tuyaux (21, 22, 23) peut être générée, le sous-sous-support de tuyaux (23) étant connecté à un côté long du sous-support de tuyaux (22) et s'étendant dans une direction d'intersection avec le côté long du sous-support de tuyaux (22).

8. Procédé d'agencement des dispositifs (31) de l'usine de traitement (1) selon la revendication 1, dans lequel, dans la pluralité de groupes de dispositifs (3), un côté de connexion à connecter à un côté long du support de tuyaux (21, 22, 23) est réglé à l'avance par rapport au bord extérieur de chaque zone occupée (30) .

9. Procédé d'agencement des dispositifs (31) de l'usine de traitement (1) selon la revendication 1, dans lequel, lorsque la pluralité de groupes de dispositifs (3) sont disposés dans la première étape, une zone de maintenance (5) est prévue dans une zone sur un côté opposé à travers la zone occupée (30) d'un côté de connexion (301) à connecter à un côté long du support de tuyaux (21, 22, 23), la zone de maintenance (5) étant une zone à laquelle un dispositif (31) disposé dans un groupe de dispositifs (3) est exécuté au moment de la maintenance et qui ne présente ni la zone occupée (30) ni la zone de disposition de supports de tuyaux (20) d'un autre groupe de dispositifs (3).

10. Procédé d'agencement des dispositifs (31) de l'usine de traitement (1) selon la revendication 1,
dans lequel les informations de tuyau comprennent des informations requises pour calculer un coût par unité de longueur du tuyau (4) en fonction de la quantité d'utilisation de matériau du tuyau, et
dans lequel la deuxième étape comprend le calcul d'un coût total du matériau de tuyau en tant que quantité totale d'utilisation de matériau de tuyau du tuyau (4) devant être supporté par le support de tuyaux (21, 22, 23) .

11. Procédé de fabrication d'une installation de traitement (1) configurée pour traiter un fluide, **caractérisé en ce que** le procédé comprend une étape consistant à agencer une pluralité de groupes de dispositifs (3) sur la base d'un agencement inclus dans une pluralité d'agencements ayant de petites quantités totales d'utilisation de matériaux de tuyaux, qui sont sélectionnés par le procédé d'agencement des dispositifs (31) de l'usine de traitement (1) selon la revendication 1, pour fabriquer ainsi l'usine de traitement (1).
